# EUROPEAN PATENT SPECIFICATION

(11) **EP 1 702 267 B1**
(45) Date of publication and mention of the grant of the patent: **05.09.2007**
(21) Application number: 04814941.3
(22) Date of filing: 20.12.2004
(51) Int. Cl.: G06F 11/14

(54) **METHOD AND APPARATUS FOR PERFORMING OPERATIONS ON SELECTED DATA IN A STORAGE AREA**
VERFAHREN UND VORRICHTUNG ZUR DURCHFÜHRUNG VON OPERATIONEN AN GEWÄHLTEN DATEN IN EINEM SPEICHERBEREICH
PROCEDE ET SYSTEME PERMETTANT D'EFFECTUER DES OPERATIONS SUR DES DONNEES CHOISIES DANS UNE ZONE DE STOCKAGE

(30) Priority: 19.12.2003 US 742128
(43) Date of publication of application: 20.09.2006
(73) Proprietor: Veritas Operating Corporation, Mountain View, California 94043 (US)
(72) Inventor: PANCHBUDHE, Ankur, P., Nagpur 440 009 (IN); KERKE, Anand, A., Pune 411 045 Baner (IN)
(74) Representative: Meldrum, David James
(86) International application number: PCT/US2004/042809
(87) International publication number: WO 2005/064468

(56) References cited:
- EP-A- 1 349 088
- US-A- 5 659 614
- US-A- 5 794 252
- US-A1- 2002 095 416
- US-A1- 2003 208 511
- US-B1- 6 665 815

## Description

Portions of this patent application contain materials that are subject to copyright protection. The copyright owner has no objection to the facsimile reproduction by anyone of the patent document, or the patent disclosure, as it appears in the Patent and Trademark Office file or records, but otherwise reserves all copyright rights whatsoever.

### BACKGROUND OF THE INVENTION

### Field of the Invention

The present invention relates to performing operations on selected data stored in a storage area, such as a storage volume.

### Description of the Related Art

Information drives business. A disaster affecting a data center can cause days or even weeks of unplanned downtime and data loss that could threaten an organization's productivity. For businesses that increasingly depend on data and information for their day-to-day operations, this unplanned downtime can also hurt their reputations and bottom lines. Businesses are becoming increasingly aware of these costs and are taking measures to plan for and recover from disasters.

Often these measures include protecting primary, or production, data, which is 'live' data used for operation of the business. Copies of primary data on different physical storage devices, and often at remote locations, are made to ensure that a version of the primary data is consistently and continuously available. These copies of data are preferably updated as often as possible so that the copies can be used in the event that primary data are corrupted, lost, or otherwise need to be restored.

Two areas of concern when a hardware or software failure occurs, as well as during the subsequent recovery, are preventing data loss and maintaining data consistency between primary and backup data storage areas. Consistency ensures that, even if the backup copy of the primary data is not identical to the primary data (e.g., updates to the backup copy may lag behind updates to the primary data), the backup copy always represents a state of the primary data that actually existed at a previous point in time. If an application performs a sequence of write operations A, B, and C to the primary data, consistency can be maintained by performing these write operations to the backup copy in the same sequence. At no point should the backup copy reflect a state that never actually occurred in the primary data, such as would have occurred if write operation C were performed before write operation B.

One way to achieve consistency and avoid data loss is to ensure that every update made to the primary data is also made to the backup copy, preferably in real time. Often such "duplicate" updates are made locally on one or more "mirror" copies of the primary data by the same application program that manages the primary data. Making mirrored copies locally does not prevent data loss, however, and thus primary data are often replicated to secondary sites. Maintaining copies of data at remote sites, however, introduces another problem. When primary data become corrupted and the result of the update corrupting the primary data is propagated to backup copies of the data through replication, "backing out" the corrupted data and restoring the primary data to a previous state is required on every copy of the data that has been made. Previously, this problem has been solved by restoring the primary data from a backup copy made before the primary data were corrupted. Once the primary data are restored, the entire set of primary data is copied to each backup copy to ensure consistency between the primary data and backup copies. Only then can normal operations, such as updates and replication, using primary data resume.

The previously-described technique of copying the entire set of primary data to each backup copy ensures that the data are consistent between the primary and secondary sites. However, copying the entire set of primary data to each backup copy at secondary sites uses network bandwidth unnecessarily when only a small subset of the primary data has changed. Furthermore, copying the entire set of primary data across a network requires a significant amount of time to establish a backup copy of the data, especially when large amounts of data, such as terabytes of data, are involved- In addition, not every storage location of a volume contains useful data. The application that uses the volume (such as a file system or database) generally has free blocks in which contents are irrelevant and usually inaccessible. Such storage locations need not be copied to secondary nodes. Therefore, copying the entire set of primary data to each backup copy at secondary nodes delays the resumption of normal operations and can cost companies a large amount of money due to downtime.

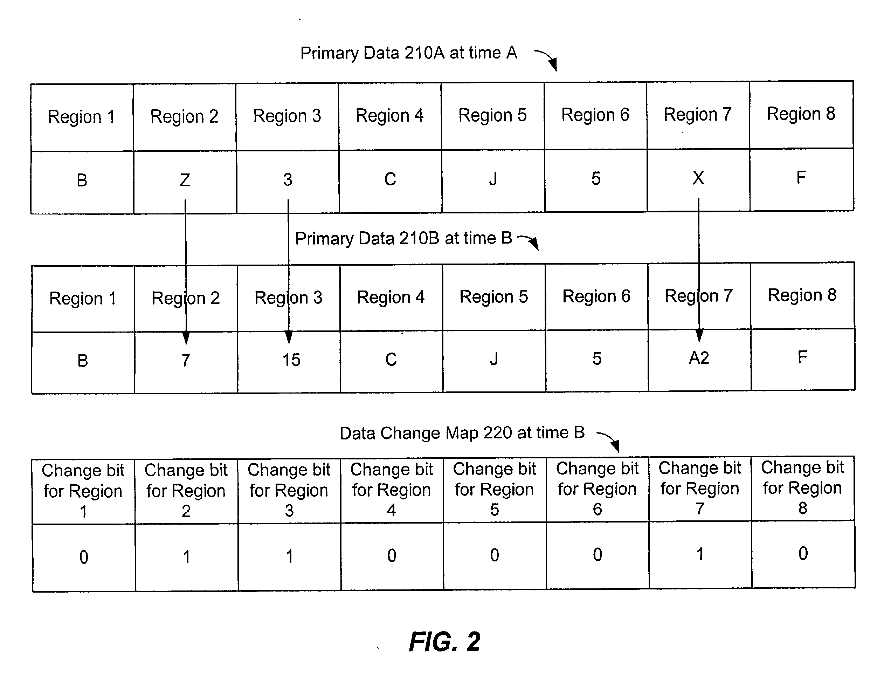

One way to replicate less data is to keep track of regions in each storage area that have changed with respect to regions of another storage area storing a copy of the data, and to only copy the changed regions. One way to keep track of changed regions is to use bitmaps, also referred to herein as data change maps or maps, with the storage area (volume) divided into regions and each bit in the bitmap corresponding to a particular region of the storage area (volume). Each bit is set to logical 1 (one) if a change to the data in the respective region has been made with respect to a backup copy of the data. If the data have not changed since the backup copy was made, the respective bit is set to logical 0 (zero). Only regions having a bit set to logical 1 are replicated. However, this solution also poses problems. If only one bit in a 64K region is changed, the entire 64K of data is copied to each secondary node. While an improvement over copying the entire storage area (volume), this solution still replicates more data than are necessary. The use of data change maps is discussed in further detail below with reference to Fig. 2.

Furthermore, this form of data change tracking operates upon regions of the storage volume rather than on logical organizations of the data, such as a selected file. All changed regions of the storage volumes are synchronized using the data change map described above. Because portions of a selected file may be scattered among multiple regions on the storage volume, the data change tracking solution does not provide for selectively synchronizing changed portions of a logical set of data, such as changed portions of a single file, on different volumes.

Such a limitation becomes problematic when very large files are involved. For example, assume that only one of a set of twenty large files on the volume is corrupted. Using the data change map described above, all changed regions containing portions of any of the twenty large files are synchronized. Furthermore, changes made to files that were not corrupted are "backed out" unnecessarily, and those files are unavailable for use during synchronization. For example, if the files contain databases, all databases stored in the changed regions of the volume would be unavailable during the time required to synchronize the data. These databases would have to be taken offline, brought back online, and logs of transactions occurring during the time the databases were offline would need to be applied to each database. Additional processing of files that are not corrupted greatly slows the synchronization process and wastes resources.

While replicating only portions of the data to secondary nodes is desirable, most replication facilities are designed to copy the contents of storage locations, without regard to the type or meaning of the data contained in the storage locations. To perform an operation that recognizes the type or meaning of the data, typically application-specific software is used. For example, copying only individual files requires knowledge of the storage locations are included in each file, which is information that is not typically available to a replication facility. Copying an individual file is possible using a file copying utility such as xcopy, but these utilities typically do not operate on selected portions of a file. For example, if only one bit has changed in a file containing one gigabyte of data, then a file copy utility must copy the entire gigabyte of data to capture the change, which is also very time consuming. A faster way to restore and/or synchronize selected data from large volumes of data and/or files is needed.

What is needed is the ability to synchronize only selected data, such as changed portions of a single file or other logical set of data, from two or more versions of the data stored in different storage areas. Preferably, the solution should enable the selected data to be synchronized without copying unnecessary data. The solution should have minimal impact on performance of applications using the data having one or more snapshots. The solution should enable other data stored in the storage areas to remain available for use and to retain changes made if the other data are not part of the selected data being synchronized.

European patent application publication number EPI349088 describes a system and method for remote a synchronous replication or mirroring of changes in a source file system snapshot in a destination replica file system using a scan of the blocks that make up two versions of a snapshot of the source file system, which identifies changed blocks in the respective snapshot files based upon differences in volume block numbers identified in a scan of the logical file block index of each snapshot

United States patent application publication number US2003/020851 describes a method for online-real-time, continuous replication of a database including a process for initially copying a database from one or more source servers to a destination server, processors for scanning database transaction log files and transaction data files to identify when data has changes, processes for replicating change data from the source server to the destination server, and processes to ensure that the source and destination databases are continually synchronised.

US patent number 5,794,252 describes a remote duplicate database facility featuring safe master audit trail check pointing.

US patent application publication number US2002/0095416 describes integration of a database into file management software for protecting, tracking and retrieving data,

### SUMMARY OF THE INVENTION

Particular aspects of the invention are set out in the appended independent claims.

The present invention includes a method, system, computer-readable medium, and computer system that perform operations on selected data in a storage area. Storage locations in the storage area can be identified by an application managing the data (such as a database application, a file system, or a user application program) for purposes of performing an operation only on the data in the identified storage locations. The storage locations containing the data are then provided to software performing the operation, which can be a storage manager or volume manager, or an application operating in conjunction with a storage manager or volume manager, such as a storage area replication facility. The software performing the operation operates only upon the identified locations, thereby affecting only the data stored within the identified locations and not other data in other unidentified storage locations.

### BRIEF DESCRIPTION OF THE DRAWINGS

The present invention may be better understood, and its numerous objectives, features and advantages made apparent to those skilled in the art by referencing the accompanying drawings.

Fig. 1 shows an example of a system environment in which the present invention may operate.

Fig. 2 shows primary data and a data change map for tracking changes to the primary data.

Fig. 3A shows examples of data for a primary storage volume and two secondary storage volumes when all data are being replicated to all secondary nodes.

Fig. 3B shows an example of data replicated using volume sieves.

Fig. 3C shows an example of data replicated using overlapping volume sieves.

Fig. 3D shows an example of data replicated using volume sieves that replicate changed data only.

Fig. 3E shows an example of data replicated using volume sieves having multiple properties (indicating multiple operations).

Fig. 3F shows an example of data replicated using multiple volume sieves on a single volume.

Fig. 3G shows an example of data replicated using a callback function.

Fig. 4 is a flowchart of a method for implementing the present invention.

The use of the same reference symbols in different drawings indicates similar or identical items.

### DETAILED DESCRIPTION

For a thorough understanding of the subject invention, refer to the following Detailed Description, including the appended Claims, in connection with the above-described Drawings. Although the present invention is described in connection with several embodiments, the invention is not intended to be limited to the specific forms set forth herein. On the contrary, it is intended to cover such alternatives, modifications, and equivalents as can be reasonably included within the scope of the invention as defined by the appended Claims.

In the following description, for purposes of explanation, numerous specific details are set forth in order to provide a thorough understanding of the invention. It will be apparent, however, to one skilled in the art that the invention can be practiced without these specific details.

References in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

### Terminology

One of skill in the art will recognize that the unit of storage can vary according to the type of storage area, and may be specified in units of blocks, bytes, ranges of bytes, files, file clusters, or units for other types of storage objects. The terms "storage area" and "storage volume" are used herein to refer generally to any type of storage area or object, and the term "regions" and/or blocks are used to describe a storage location on a storage volume. The use of the terms volume, region, block, and/or location herein is not intended to be limiting and is used herein to refer generally to any type of storage object.

Each block of a storage volume is typically of a fixed size; for example, a block size of 512 bytes is commonly used. Thus, a volume of 1000 Megabyte capacity contains 2,048,000 blocks of 512 bytes each. Any of these blocks can be read from or written to by specifying the block number (also called the block address). Typically, a block must be read or written as a whole. Blocks are grouped into regions; for example, a typical region size is 32K bytes. Note that blocks and regions are of fixed size, while files can be of variable size. Therefore, synchronizing data in a single file may involve copying data from multiple regions.

Each storage volume may have its own respective data change map to track changes made to each region of the volume. Note that it is not a requirement that the data change map be implemented as a bitmap. The data change map may be implemented as a set of logical variables, as a table of indicators for regions, or using any means capable of tracking changes made to data in regions of the storage volume.

In many environments, replica data are not changed in order to preserve an image of the primary volume at the time the replica was made. Such unchanged replica volumes are sometimes referred to as static replica volumes, and the replica data is referred to as a static replica. It is possible that data may be accidentally written to a static replica volume, so that the respective data change map shows that regions of the replica volume have changed.

In other environments, it may be desirable to allow the replica to be independently updated after the replica is made. For example, the primary and replica volumes are typically managed by different nodes in a distributed system, and the same update transactions may be applied to both volumes. If the node managing data on one of the volumes fails, the other volume can be used to synchronize the failed volume to a current state of the data. Independently updated replicas are supported by maintaining a separate bitmap for the replica volume.

### Introduction

The present invention includes a method, system, computer-readable medium, and computer system to perform operations on selected data in a storage area. Storage locations in the storage area can be identified by a requester for performing an operation only on the data in the identified storage locations. The requester can be an application managing the data (such as a database application, file system, or user application program) or a storage manager. The storage locations containing the data are obtained by software performing the operation, which can be a storage manager or an application operating in conjunction with a storage manager, such as a storage area replication facility. The software performing the operation operates only upon the identified locations, thereby affecting only the data stored within the identified locations. The requester can specify the operation to be performed as well as entities having permission to perform the operation on specified subsets of the storage locations.

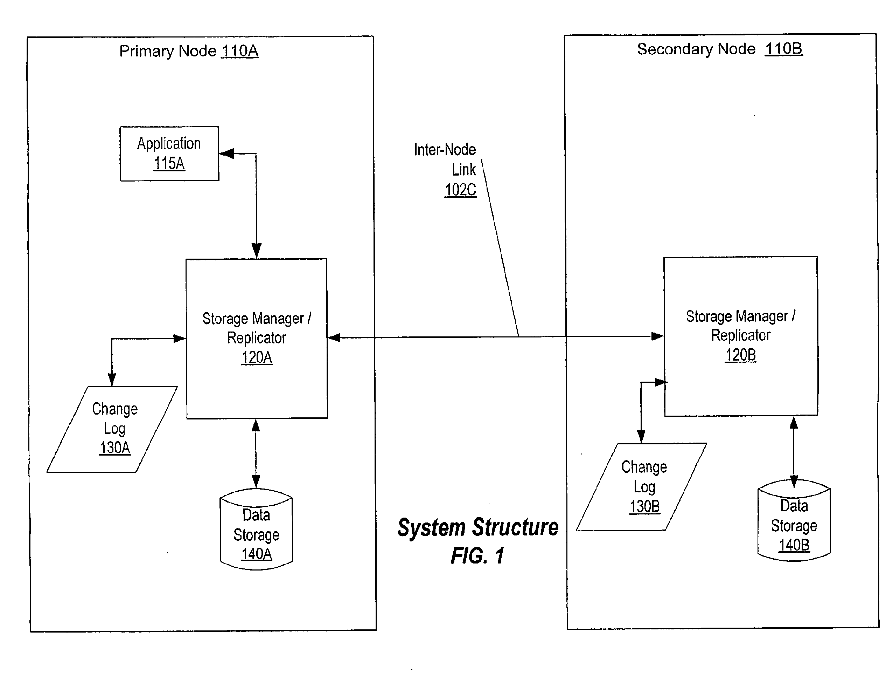

Fig. 1 shows an example of a system environment in which the present invention may operate. Two nodes are shown, primary node 110A and secondary node 110B. Software programs application 115A and storage manager / replicator 120A operate on primary node 110A. Application 115A manages primary data that can be stored in change log 130A and data storage 140A.

Change log 130A can be considered to be a "staging area" to which changes to data are written before being written to data storage 140A. Change logs such as change log 130A, also referred to simply as logs, are known in the art and can be implemented in several different ways; for example, an entry in the log may represent an operation to be performed on a spec ified region of the data. Alternatively, the log may be structured to maintain a set of operations with respect to each region. Other types of log structures are also possible, and no particular type of implementation of change logs is required for operation of the invention. The invention can be practiced without using a log, although using a log is preferable.

Storage manager / replicator 120A intercepts write operations to primary data by application 115A and replicates changes to the primary data to secondary node 110B. The type of replication performed by storage manager / replicator 120A can be synchronous, asynchronous, and/or periodic, as long as updates are applied consistently to both the primary and secondary data storage.

While application 115A and storage manager / replicator 120A may run on the same computer system, such as primary node 110A, the hardware and software configuration represented by primary node 110A may vary. Application 115A and storage manager / replicator 120A may execute on different computer systems. Furthermore, storage manager / replicator L 20A can be implemented as a separate storage management module and a replication module that operate in conjunction with one another. Application 115A itself may have provide some storage management functionality.

Change log 130A may be stored in non-persistent or persistent data storage, and data storage 140A is a logical representation of a set of data stored on a logical storage device which may include one or more physical storage devices. Furthermore, while connections between application 115A, storage manager / replicator 120A, change log 130A, and data storage 140A are shown within primary node 110A, one of skill in the art will understand that these connections are for illustration purposes only and that other connection configurations are possible. For example, one or more of application 115A, storage manager / replicator 120A, change log 130A, and data storage 140A can be physically outside, but coupled to, the node represented by primary node 110A.

Secondary data storage 140B is logically isolated from primary data storage 140A, and may be physically isolated as well. Storage manager / replicator 120A of primary node 110A communicates over replication link 102C with storage manager / replicator 120B of secondary node 110B. Secondary node 110B also includes a change log 130B and data storage 140B for storing a replica of the primary data, and similar variations in hardware and software configuration of secondary node 110B are possible. It is not required that a change log, such as change log 130B, be present on the secondary nodes, such as secondary node 110B.

Fig. 2 shows an example of primary data at two points in time, where primary data 210A represents the primary data as it appeared at time A and primary data 210B represents the primary data as it appeared at time B (time B being later than time A). Also shown is a corresponding data change map 220 at time B showing eight regions of the primary data for explanation purposes. As shown in data change map 220, the primary data in regions 2, 3, and 7 changed between times A and B. Assume that a snapshot of the data is taken at time A. If the primary data are later corrupted, then the primary data can be restored back to the state of the data at the time the snapshot was taken. This restoration can be accomplished by copying regions 2, 3, and 7 (identified as the regions having a value of 1 in the data change map) from the snapshot to the primary data. Alternatively, to bring the snapshot up to date, regions 2, 3, and 7 can be copied from the primary data 210B at time B to the snapshot. This solution enables the two copies of the data to be synchronized without copying all data (such as all data in a very large file) from one set of data to the other.

As mentioned above, tracking changes at the regional level can be inefficient. The present invention proposes the use of a mechanism referred to as a "volume sieve," or simply as a "sieve," to enable operations to be performed only upon selected storage locations. Sieves are described in further detail in the section below.

### Sieves

Conceptually, a sieve can be described as a mechanism which allows the user (person or application program) of a storage area (volume) to indicate which operations can be or should be performed on selected storage locations of the storage area (volume) (and not just the storage area as a whole). Sieve(s) can serve as a fine-grained access and processing control mechanism as well as a filter. Volume sieves have many applications, including replication of only selected data stored in a storage area (volume), replication of different sets of selected data to multiple secondary nodes (one-to-many, many-to-many, many-to-one), cluster access control, and low-level data security.

Generally, a sieve can be envisioned as having two components: a property and a set of one or more locations upon which an operation indicated by the property can be performed. The property is an abstraction of operations that can be performed on a storage area (volume). Examples of operations are replication, backup, reading, writing, accessing data within a cluster, compression, encryption, mirroring, verifying data using checksums, and so on. A property may be implemented, for example, as a set of instructions to be performed by software performing the operation. Such a set of instructions can be implemented as a callback function, wherein the software performing the operation provides another module requesting the operation to be performed with the name of a function to call when the other module requests the operation.

The set of one or more storage locations can be represented as set of one or more extents. A file extent includes a layout of physical storage locations on a physical storage volume. The file extent typically includes an address for a starting location in the file and a size (the number of contiguous locations beginning at the address). A single file can include several non-contiguous portions (each of which will have a respective starting location and size). One of skill in the art will recognize that file extents can be expressed in storage units such as file clusters, but are referred to herein as locations on the volumes for simplicity purposes.

A set of extents may be represented as an extent map (or a bitmap) indicating portions of the underlying volume. If an extent (an address range) is present in the sieve's extent map, the sieve property is applicable to the storage locations in that address range. Extents that are not in the map are not affected by the operation(s) represented by the sieve property. For example, a sieve can be created with the property of replication and extents specifying the portions of the volume to be replicated; the portions of the volume that are not indicated in the sieve are not replicated.

The following section provides examples of operations performed using sieves, and further details about implementation of sieves are provided thereafter..

### Example Operations Using Sieves

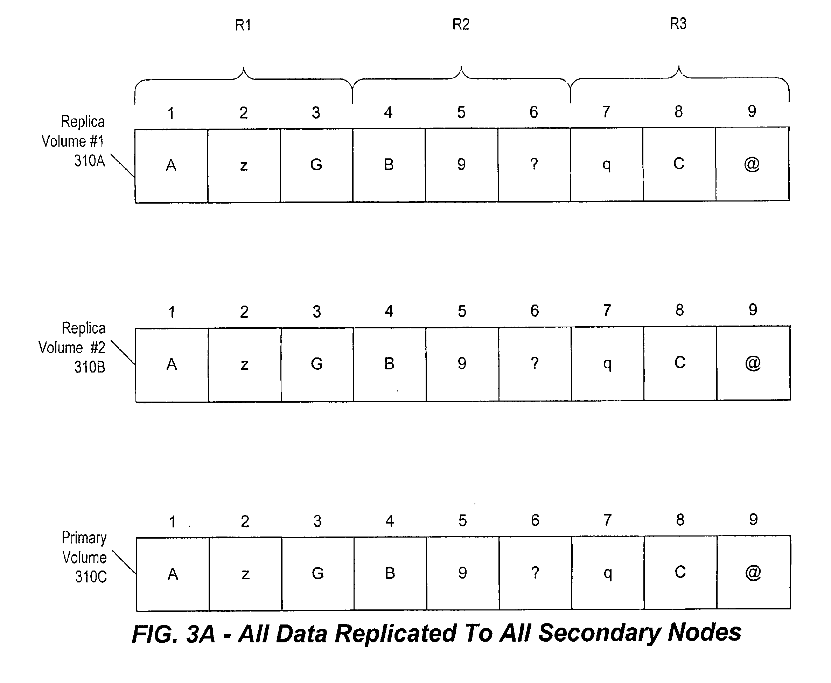

Fig. 3A shows examples of data for a primary storage volume and two secondary storage volumes when all data are being replicated to all secondary nodes. Each of replica volumes 310A and 310B and primary volume 310C shows data for nine storage locations, with the three regions R1, R2, and R3 each including three of the storage locations. In each of storage volumes 310A, 310B, and 310C, storage locations 1, 2, and 3 of region R1 contain data, respectively, having values 'A,' 'z,' and 'G.' Storage locations 4, 5, and 6 of region R2 contain data, respectively, having values 'B,' '9,' and '?.' Storage locations 7, 8, and 9 of region R3 contain data, respectively, having values 'q,' 'C,' and '@.' Both secondary storage volumes 310A and 310B are synchronized with primary data volume 310C.

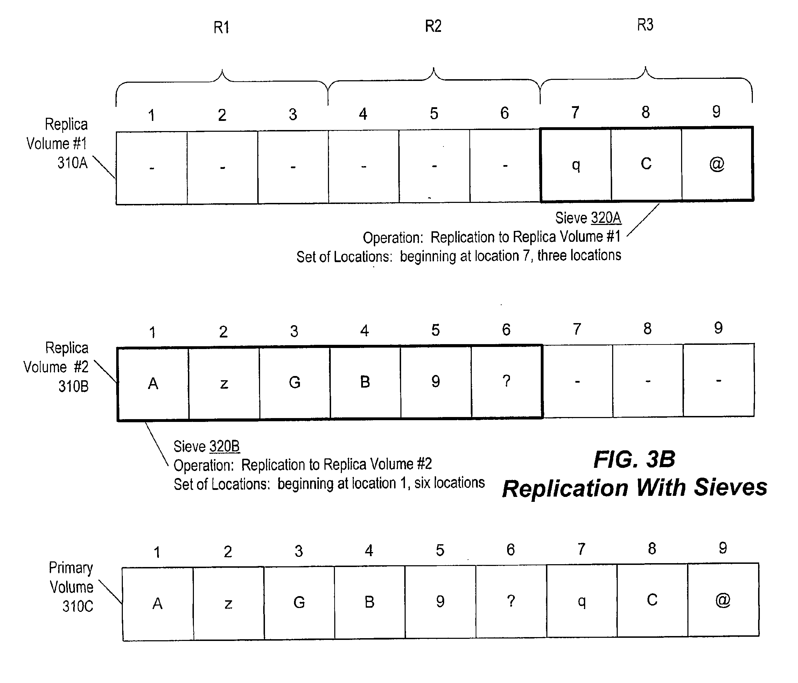

Fig. 3B shows an example of data replicated using volume sieves. Sieve 320A includes a property having an operation of replication to replication volume #1 (replication volume 310A), which applies to the set of locations beginning at location 7 and including three locations. In this example, sieve 320A storage locations 7, 8, and 9 of region R3, having respective values 'q', 'C,' and '@.'

Sieve 320B includes a property having an operation of replication to replication volume #2 (replication volume 310B), which applies to the set of locations beginning at location 1 and including six locations. Sieve 320B applies to storage locations 1 through 3 of region R1, having respective values 'A,' 'z,' and 'G,' and storage locations 4 through 6 of region R2, having respective values 'B,' '9,' and '?.'

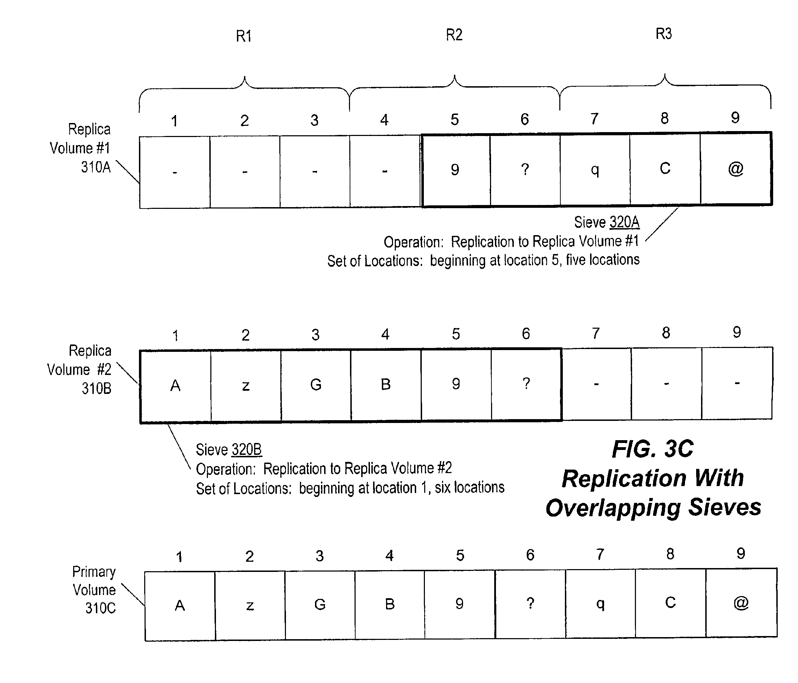

Fig. 3C shows an example of data replicated using overlapping volume sieves. Sieve 320A includes a property having an operation of replication to replication volume #1 (replication volume 310A), which applies to the set of locations beginning at location 5 and including five locations. In this example, sieve 320A applies to storage locations 5, 6, 7, 8, and 9 of regions R2 and R3, having respective values 'B,' '9,' 'q', 'C,' and '@.'

Sieve 320B includes a property having an operation of replication to replication volume #2 (replication volume 310B), which applies to the set of locations beginning at location I and including six locations. Sieve 320B applies to storage locations 1 through 3 of region R1, having respective values 'A,' 'z,' and 'G,' and storage locations 4 through 6 of region R2, having respective values 'B,' '9,' and '?.' Storage locations 5 and 6 are replicated to both replica volumes 310A and 310B.

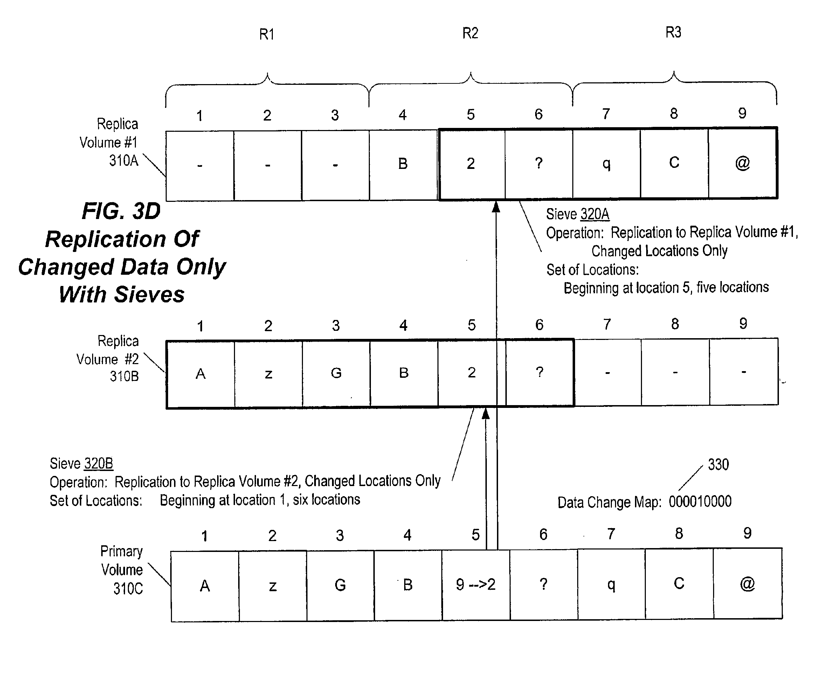

Fig. 3D shows an example of data replicated using volume sieves that replicate changed data only. In this example, the sieves 320A and 320B are similar to those shown for Fig. 3C, but the property specifies that the operation of replication is to be applied to changed storage locations only. Only data in changed storage locations are replicated; in this example, only the data in storage location 5 have changed from a value of '9' to a value of '2,' as indicated by data change map 330, showing only the bit for region 5 as changed. The value of '2' is replicated to both replica volumes 310A and 310B.

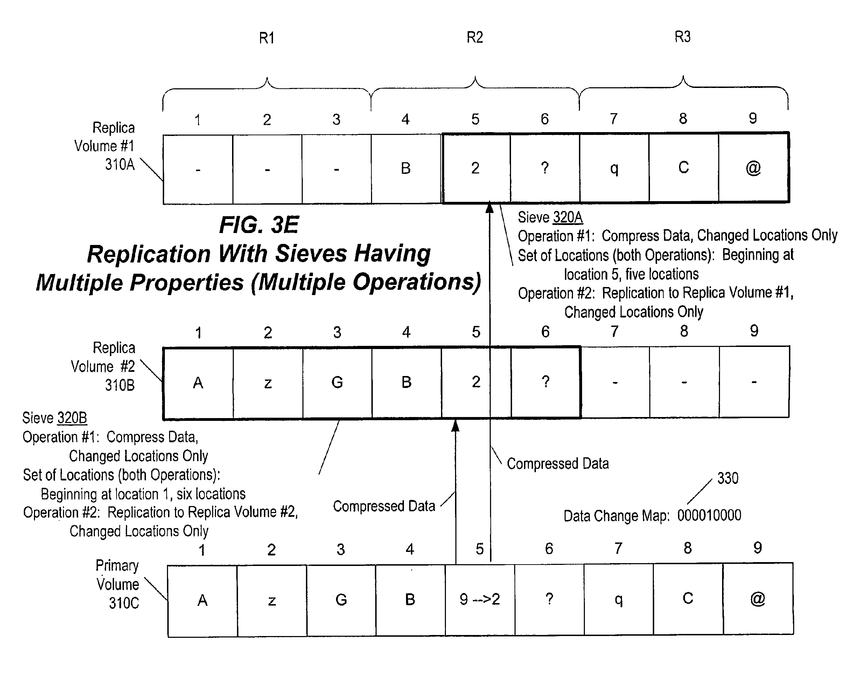

Fig. 3E shows an example of data replicated using volume sieves having multiple properties (indicating multiple operations). Sieve 320A includes a property having operations of compression and replication to replication volume #1 (replication volume 310A). Both of these operations apply to the set of locations beginning at location 5 and including five locations, but the operations are to be performed only when those locations contain data that are changed. In this example, sieve 320A applies to storage locations 5, 6, 7, 8, and 9 of regions R2 and R3, having respective values '2,' '?', 'q', 'C,' and '@.' Data change map 330 indicates that only data in storage location 5 have changed. Data in storage location 5 of primary volume 310C are compressed and then replicated to replica volume 310A.

Sieve 320B also includes a property having operations of compression and replication to replication volume #2 (replication volume 310B), which applies to the set of locations beginning at location 1 and including six locations, only when those locations contain data that are changed. Sieve 320B applies to storage locations 1 through 3 of region R1, having respective values 'A,' 'z,' and 'G,' and storage locations 4 through 6 of region R2, having respective values 'B,' '9,' and '?.' Data in storage location 5 are compressed and replicated to replica volume 310B.

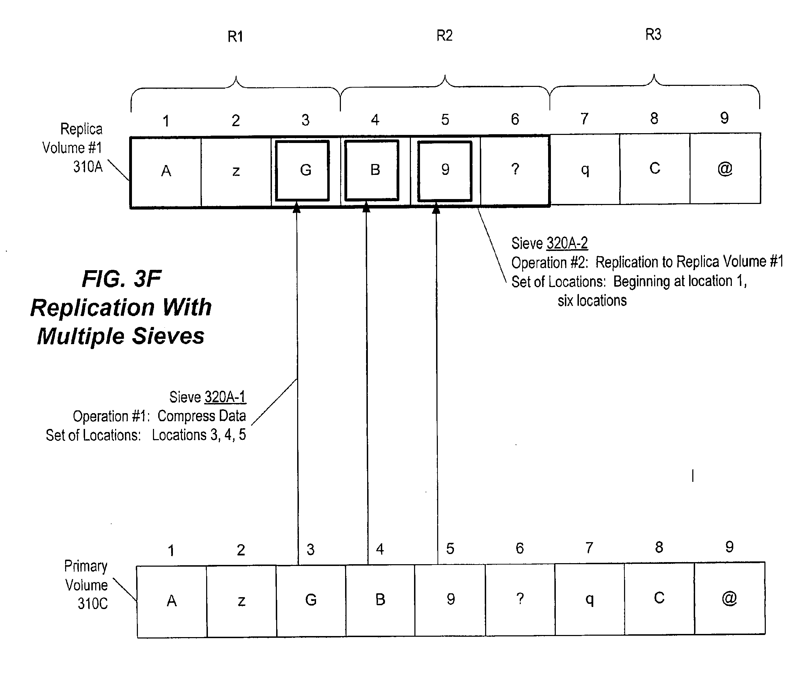

Fig. 3F shows an example of data replicated using multiple volume sieves on a single volume. Sieve 320A-1 has a property indicating compression of data to be performed on data contained in locations 3, 4, and 5. Sieve 320A-2 has a property indicating replication to replica volume #1. The set of locations to be replicated include six locations beginning at location 1. In applying both sieves, data in locations 3, 4, and 5 are compressed in accordance with sieve 320A-1, and data in locations 1 through 6 are replicated to replica volume 310A in accordance with sieve 320A-2. Data in storage locations 3, 4, and 5 are compressed prior to replication, and data in storage locations 1, 2, and 6 are not.

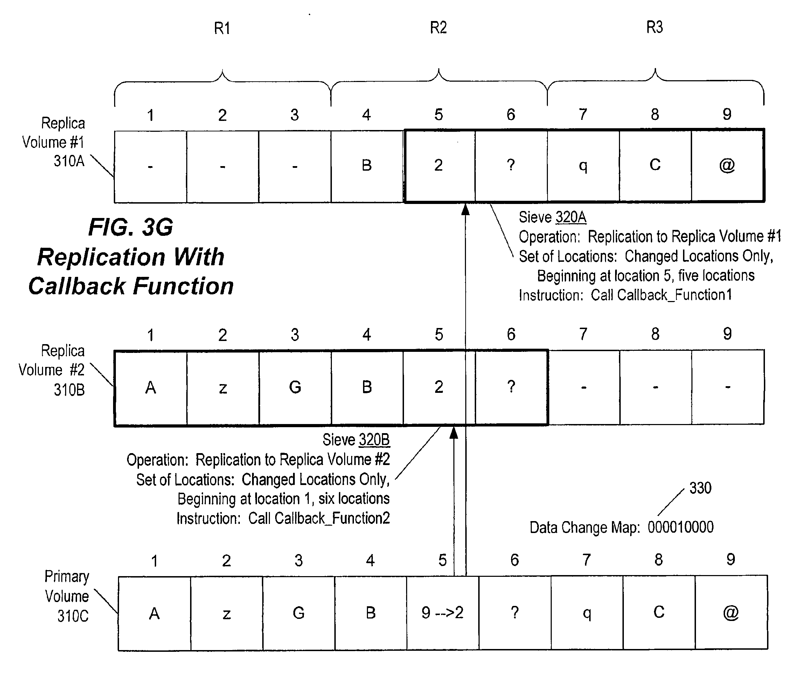

Fig. 3G shows an example of data replicated using a callback function. Sieve 320A includes a property having an operation of replication to replication volume #1 (replication volume 310A), which applies to the set of locations beginning at location 5 and including five locations, for locations having changed data only. In addition, an instruction to call Callback_Function 1 is included in the sieve. In this example, sieve 320A applies to storage locations 5, 6, 7, 8, and 9 of regions R2 and R3, having respective values 'B,' '9,' 'q', 'C,' and '@.' Callback_Function1 is called prior to the data being replicated.

Sieve 320B includes a property having an operation of replication to replication volume #2 (replication volume 310B), which applies to the set of locations beginning at location 1 and including six locations, for locations containing changed data only. In addition, an instruction to call Callback_Function2 is included in the sieve. Sieve 320B applies to storage locations 1 through 3 of region R1, having respective values 'A,' 'z,' and 'G,' and storage locations 4 through 6 of region R2, having respective values 'B,' '9,' and '?.' Data change map 330 indicates that only storage location 5 contains changed data. As a result, data in storage location 5 are replicated to replica volume 310B after calling Callback_Function2.

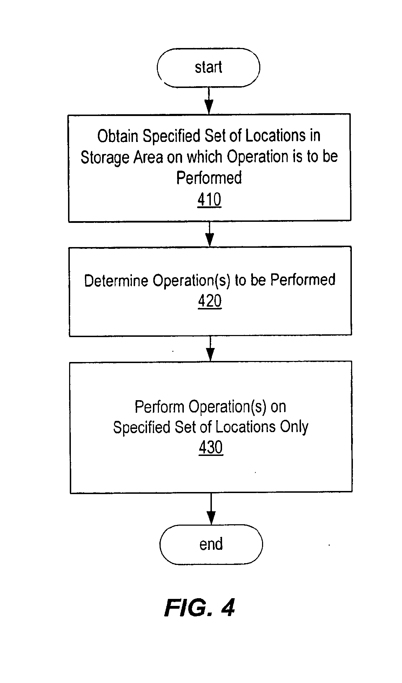

Fig. 4 is a flowchart of a method for implementing the present invention. In "Obtain Specified Set of Locations in Storage Area on which Operation is to be Performed" step 410, a specified set of locations is obtained. These storage locations are preferably provided by an application having knowledge of the type and contents of the data in the storage area. The specified storage locations are the only storage locations containing data upon which an operation is to be performed. The operation is determined in "Determine Operation(s) to be Performed" step 420. For example, a sieve's properties can be accessed to determine the operations to be performed. Control then proceeds to "Perform Operation(s) on Specified Set of Locations Only" step 430, where the operation(s) are performed on data in the specified set of locations. Data in other unspecified storage locations are not affected by the operation(s).

The following section provides an example implementation of sieves, which is provided for illustration purposes only and does not limit the scope of the invention.

### Example Implementation of Sieves

A volume sieve can be described as a property and a set of one or more storage locations to which an operation indicated by the property is to be performed. The sieve property can be represented as a bit string, where each bit in the string corresponds to one of the possible volume operations. If a particular bit is set, then the corresponding property is active and the equivalent operation is performed on the data stored in the underlying storage area (volume). If more than one bit is set in the string, then the sieve represents a combination of properties. For example, if the bit position for replication property is VOL_SIEVE_PROPERTY_REPLICATE and that for compression is VOL_SIEVE_PROPERTY_COMPRESS, then the volume sieve property can be set to (VOL_SIEVE_PROPERTY_REPLICATE_VOL_SIEVE_PROPERTY_COMPRESS) to indicate that the replication of the involved portions of the volume should be compressed.

Multiple sieves can be applied to a storage area (volume) with various properties. Sieves can also have extra dimensions to indicate the application of operation(s) indicated by the sieve property not only to a specific set of locations, but also to specific nodes in a cluster, secondary nodes for replication, and/or other such entities. Thus, for example, regions of the volume to be replicated to each of several secondary nodes can be indicated, as well as nodes in the cluster that can access particular portions of the data.

The second component of a sieve is set of one or more storage locations to which operations indicated by the property apply. In one embodiment, a sieve is stored persistently as an extent list (a set of offset-length pairs) and can be expanded into a bitmap (with each bit representing a fixed-size volume region/block) when being loaded into memory. A bitmap with each bit representing a region can be manipulated and queried more quickly and easily, providing quick response to membership queries. The extent list can be thought of as a compression (length-encoded) of the bitmap. An extent list is more suitable for persistent storage, being more compact than a bitmap. Another alternative for extent map representation is an interval tree-based representation, also providing fast indexing but being more difficult to manipulate.

As mentioned earlier, one or more sieves can be applied to a given volume. For example, consider the compressed replication sieve described earlier. Instead of applying only one sieve with a combined property, the user (person or application program) can choose to apply two sieves (one for VOL_SIEVE_PROPERTY_REPLICATE and another for VOL_SIEVE_PROPERTY_COMPRESS) in such a way that only data in specified locations of the storage area (volume) are replicated after compressing and data in other storage locations are sent without being compressed. Conflicts may occur between multiple sieve properties, or, in some cases, the combination of properties may not be meaningful. This problem can be resolved by implementing a sieve with instructions to determine whether to allow or abort a given operation. Each operation, before starting, can be implemented to consult any sieve that corresponds to that operation and check whether that operation can be or should be performed on the specified set of locations in the storage area (volume) address space.

Sieves described previously having only a property and a set of locations can be thought of as one-dimensional, in the sense that they represent the volume address space only. Other dimensions can be added to a sieve to further the capacity and power of the sieve mechanism. An additional dimension can represent, for example, the applicability of the sieve property to certain entities (for the given extents); the entities form the extra dimension. The meaning of the extra dimension can be indicated by combining it with the sieve property (the dimension can be thought of as a meta-property) and the dimension entities themselves can be specified by adding them to the extent list.

For example, for a sieve property (VOL_SIEVE_PROPERTY_WRITE|VOL_SIEVE_PROPERTY_CLUSTER) and the two-dimensional extent list {[20,45,(N1)], [1000,*,(N1, N2, N3)]}, the additional dimension is represented by the meta-property VOL_SIEVE_PROPERTY_CLUSTER which indicates that the sieve applies to cluster operations and the dimension itself is represented by the tuples (N1) and (N1, N2, N3). This particular sieve indicates that only node N1 in the cluster is allowed to write to address range [20, 45], while the address range 1000 to end of volume can be written by any of nodes N1, N2 and N3.

Another way of representing the extra dimension(s) is to have a separate one-dimensional sieve for each entity in the dimension. In this form of representation, one extent map exists for each entity in each extra dimension. For the above example, for the extra dimension of VOL_SIEVE_PROPERTY_CLUSTER, node N1 has the sieve {[20,45], [1000,*]}, N2 has {[1000,*]} and N3 has {[1000,*]}. Although this representation is redundant and requires more storage space that the above-described representation, this representation may be easier to interpret.

In one embodiment, sieves are associated with a storage area (volume) though the storage area's record in a configuration database. Sieves are represented as a new type of configuration record so that transactional operations can be performed on a sieve. In one embodiment, sieves are loaded into the kernel memory of the computer system hosting the data management software and/or replication facility, since most sieve properties affect the I/O path to the storage area (volume).

Because a given storage area (volume) may have many sieves, another embodiment uses volume sets for storing sieves. A volume set contains a separate volume for storing metadata for the volumes, in addition to the source data volumes. A sieve can be considered to include metadata for the source data volumes.

In one embodiment, a sieve can be changed (e.g., the sieve property can be set or modified, and an extent list can be added, changed, or deleted) through an administrator command or through an application programming interface (API, using ioctls or library calls). Changing a sieve is a sensitive operation because a sieve affects the way operations are performed on a storage area (volume). In one embodiment, a sieve is protected by a change key so that the sieve can be changed only if the correct change key is presented. The change key can be set to NULL, in which case no key must be presented to change the sieve. In this embodiment, a sieve can be changed only by the administrator of the system (e.g., root in Unix) or by an application with system privileges (e.g., by a file-system such as Veritas File System (VxFS) provided by Veritas Software Corporation of Mountain View, California).

### Applications of Sieves

As previously mentioned, a replication facility typically is designed to replicate the contents of an entire storage area (volume). However, it may be unnecessary to replicate all data stored in the storage area (volume) since only certain data are critical or the user may want to replicate only certain portions of the data to particular secondary nodes. In such scenarios, a sieve with replication property can be used to perform selective or partial replication of data stored in the storage area (volume). An extra dimension (indicating the secondary nodes to which replication is to be performed) can be added to indicate which secondary node should receive which portions of the data.

When only a portion of application data is to be replicated (e.g., a file or directory in the file-system), the application can determine the extents (or regions) of the volume which should be replicated to create a logically consistent (albeit partial) image on the secondary nodes. For example, all data and metadata extents for the file or directory which is to be replicated are determined, so that the secondary file system can be mounted only with the specified file or directory. These extents can then be added to the replication sieve. As data changes or new data is added, the application can change or add extents to the sieve appropriately.

Consider the scenario where a company develops and sells many software products, and each product has its own data repository (such as a source code repository, customer records, related documents, and so on). Although repositories can be maintained in one place (such as on a central server), product development and sales activities are distributed around the globe. The product development and sales groups, which are spread across different sites, have their own local servers (for faster access). Furthermore, each development team in the development group can have its own cache servers.

Selective file replication can be useful in such a scenario by replicating only relevant files/directories to the relevant servers. For example, suppose that a /project directory holds all the source repositories on a central server. Using selective file replication, only the /project/unix source code tree is replicated to a Unix team's server, and only the /project/Windows tree is replicated to a Windows team's server. Whenever a developer submits source code to the central repository, the new source code can be replicated selectively to only relevant servers. For example, source code checked into the Unix source code tree is replicated only to the Unix server.

Selective file replication can also be useful in data security scenarios. For example, a remote node may not need access to all data for a file-system, in which case only the needed files and directories are replicated to the remote node.

Selective file replication can also be used to perform load-balancing within a cluster or on a switch network where part of the volume (virtual LUN) is replicated to one switch/host and another part is replicated to another. Such selective replication can be used to achieve one-to-many or many-to-many split replication, which will help in balancing the replication load on the secondary nodes. When a storage area is very large and the changes are distributed throughout, the nodes at the primary site (e.g. a cluster or a switch-network) can divide the address space between themselves to balance the load, with each node replicating only certain storage locations within the source volume. The secondary nodes can combine the replication streams (many-to-one) or, as described earlier, secondary nodes can perform many-to-many split replication.

Other possible uses of the volume sieve mechanism include restricting access to data by cluster nodes. Multi-dimensional sieves can be created to specify which nodes in a cluster are allowed access (read/write) to which specified storage locations of the storage area (volume). The volume sieve mechanism can also be used to support operations such as compression and encryption. The bits or extents in the sieve can indicate whether a given region or extent should compressed or encrypted during an operation. A sieve can also be used to back up only selected data. A backup sieve can be used to indicate the extents to be backed up in the current backup cycle.

A sieve can also be used to allow read/write access only to portions of the storage area (volume). This sieve mechanism can provide the lowest level of data security and can be used by file-system (or other applications) to protect critical data from inadvertent or malicious change/access. The sieve can be further protected using a change key or a similar mechanism

Sieves can be used to mirror only certain storage locations containing data, thereby mirroring only critical data. Furthermore, sieves can be used to avoid copy-on-write operations. Such a sieve can be used to prevent pushing old data to snapshots when the old data is not critical or useful enough to be maintained in a snapshot. Finally, sieves can be used to create partial snapshots or images. Sieves can be used to create images of volumes containing only a part of the original's address space. Snapshots can also use this mechanism to preserve (using copy-on-write operations) only certain storage locations of the source storage area (volume).

The present invention can be applied to any logical set of data, as long as physical locations on the storage volume for the logical set of data can be determined. These physical locations can be mapped to changed regions on the storage volume and only the changed portions of the logical set of data can be synchronized. Furthermore, only the selected data is affected by the synchronization. Other data on the storage volume remain available for use and are not changed by the synchronization.

Advantages of the present invention are many. The invention allows an application to control operations selected storage locations within a storage area for its own purposes. Previously, operations such as replication have been controlled internally by storage area management software and/or replication facilities, and such operations have been inaccessible to application-level software such as file systems and database management systems.

Using the invention, application software can provide instructions to perform an operation on a selected set of storage locations within a storage area, rather than on the entire storage area. The set of one or more storage locations, which need not have continuous addresses, can be of any size, from a single indivisible disk block to the entire storage area. The operation to be performed on the set of locations is decided by the application, but is performed by a storage manager and its peripheral entities (such as a replication facility).

In addition, an application can also provide a set of instructions to be performed on data in a selected set of storage locations. In this case, the set of instructions may be for operation(s) that the storage manager cannot perform. The set of instructions can be performed in the form of a function callback or similar mechanism, where the storage manager calls the application to perform the operation(s). The storage manager does not know or have the set of instructions (e.g. a callback function) prior to the application registering the callback function with the storage manager.

### Other Embodiments

The functionality described in Figs. 3A through 3G and 4 can be provided by many different software and hardware configurations. One of skill in the art will recognize that the functionality described for the replication and synchronization facilities herein may be performed by various modules, instructions, and/or other means of providing the functionality.

Storage manager functionality of storage manager / replicator 120A of Fig. 1A may be implemented in various ways; for example, storage manager / replicator 120A is shown between application 115A and data storage 140A in Fig. 1A and operates "in-band" with reference to the input/output stream between the originator of a I/O operation, here application 115A, and the data storage to which the I/O operation is targeted, here data storage 140A. Examples of commercial implementations of an in-band storage manager are Veritas Volume Manager and Cluster Volume Manager produced by Veritas Software Corporation of Mountain View, California, although other commercially-available products provide in-band storage management functionality and the invention is not limited to these embodiments.

Alternatively, storage manager functionality can be implemented "out of band" with reference to the I/O stream between the originator of the I/O operation and the data storage to which the I/O operation is targeted. For example, an I/O operation may be directed to data storage implemented as a storage manager embedded within a storage array, a storage appliance, or a switch of a fibre channel storage area network (SAN) fabric. An example of an out-of-band storage manager is SAN Volume Manager produced by Veritas Software Corporation of Mountain View, California, although other commercially-available products provide in-band storage management functionality and the invention is not limited to this embodiments.

Storage manager functionality can also be distributed between in-band and/or out-of-bound storage managers across a network or within a cluster. Separate storage management tasks can be distributed between storage managers executing on separate nodes. For example, a storage manager executing on one node within a network or cluster may provide the functionality of directly sending an I/O stream to a storage device, and another storage manager on another node within the network or cluster may control the logical-to-physical mapping of a logical data storage area to one or more physical storage devices.

In addition, a module containing some storage manager functionality may request services of another module with other storage manager functionality. For example, the storage manager of the previous paragraph directly sending the I/O stream to a local storage device may request the other storage manager to perform the logical-to-physical mapping of the logical data storage before writing to the local physical storage device.

Furthermore, a determining module may determine the physical locations for the selected data in the storage volumes, and a separate identifying module may identify changed regions of the storage volumes (for example, using the data change maps described herein). Another determining module may determine when the physical locations and the changed regions correspond. A separate synchronizing module may also synchronize data in locations for the selected data on the primary volume with data in corresponding locations for the selected data on the snapshot volume, in either direction.

Alternatively, a single module may be used to determine the physical locations for the selected data in the storage volumes and identify changed regions of the storage volumes. The single module may also determine when the physical locations and the changed regions correspond. The single module may also synchronize data in locations for the selected data on the primary volume with data in corresponding locations for the selected data on the snapshot volume, in either direction. Other configurations to perform the same functionality are within the scope of the invention.

The actions described with reference to Fig. 4 may be performed, for example, by a computer system that includes a memory and a processor configured to execute instructions, such as primary node 110A and secondary node 110B of Fig. 1; by an integrated circuit (e.g., an FPGA (Field Programmable Gate Array) or ASIC (Application-Specific Integrated Circuit) configured to perform these actions; or by a mechanical device configured to perform such functions, such as a network appliance.

The present invention is well adapted to attain the advantages mentioned as well as others inherent therein. While the present invention has been depicted, described, and is defined by reference to particular embodiments of the invention, such references do not imply a limitation on the invention, and no such limitation is to be inferred. The invention is capable of considerable modification, alteration, and equivalents in form and function, as will occur to those ordinarily skilled in the pertinent arts. The depicted and described embodiments are examples only, and are not exhaustive of the scope of the invention.

The foregoing described embodiments include components contained within other components, such as a storage volume containing both a sieve and data. It is to be understood that such architectures are merely examples, and that, in fact, many other architectures can be implemented which achieve the same functionality. In an abstract but still definite sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermediate components. Likewise, any two components so associated can also be viewed as being "operably connected," or "operably coupled," to each other to achieve the desired functionality.

The foregoing detailed description has set forth various embodiments of the present invention via the use of block diagrams, flowcharts, and examples. It will be understood by those within the art that each block diagram component, flowchart step, operation and/or component illustrated by the use of examples can be implemented, individually and/or collectively, by a wide range of hardware, software, firmware, or any combination thereof.

The present invention has been described in the context of fully functional computer systems; however, those skilled in the art will appreciate that the present invention is capable of being distributed as a program product in a variety of forms, and that the present invention applies equally regardless of the particular type of signal bearing media used to actually carry out the distribution. Examples of signal bearing media include recordable media such as floppy disks and CD-ROM, transmission type media such as digital and analog communications links, as well as media storage and distribution systems developed in the future.

The above-discussed embodiments may be implemented by software modules that perform certain tasks. The software modules discussed herein may include script, batch, or other executable files. The software modules may be stored on a machine-readable or computer-readable storage medium such as a disk drive. Storage devices used for storing software modules in accordance with an embodiment of the invention may be magnetic floppy disks, hard disks, or optical discs such as CD-ROMs or CD-Rs, for example. A storage device used for storing firmware or hardware modules in accordance with an embodiment of the invention may also include a semiconductor-based memory, which may be permanently, removably, or remotely coupled to a microprocessor/memory system. Thus, the modules may be stored within a computer system memory to configure the computer system to perform the functions of the module. Other new and various types of computer-readable storage media may be used to store the modules discussed herein.

Those skilled in the art will readily implement the steps necessary to provide the structures and the methods disclosed herein, and will understand that the process parameters and sequence of steps are given by way of example only and can be varied to achieve the desired structure as well as modifications that are within the scope of the invention. Variations and modifications of the embodiments disclosed herein can be made based on the description set forth herein, without departing from the scope of the invention. Consequently, the invention is intended to be limited only by the scope of the appended claims, giving full cognizance to equivalents in all respects.

## Claims

1. A method comprising:
in response to a request to perform an operation on a storage area, accessing a sieve associated with the storage area, wherein
the sieve comprises a property representing the operation and information identifying a set of one or more locations within the storage area upon which the operation can be performed; and
performing the operation only upon locations that are included in the set of one or more locations of the storage area identified in the sieve.

2. The method of claim 1 wherein
the set of one or more locations of the storage area is specified by an application program,

3. The method of claim 1 wherein
the operation is replication.

4. The method of claim 1 further comprising:
obtaining information identifying a set of entities from the sieve, wherein
an entity in the set of entities has permission to perform the operation on respective data in the set of one or more locations of the storage area.

5. The method of claim 1 wherein
the set of one or more locations of the storage area is designated by a requester.

6. The method of claim 5 further comprising:
obtaining a designation of the operation to be performed.

7. The method of claim 5 wherein
the requester manages data in the storage area.

8. The method of claim 5 wherein
the requester performs a management function of a set of management functions for the storage area.

9. The method of claim 5 wherein
the requester identifies a respective physical location in the storage area corresponding to each location in the set of one or more locations of the storage area.

10. The method of claim 5 wherein
each location in the set of one or more locations of the storage area is specified by a beginning location and
a number of contiguous locations starting at the beginning location.

11. The method of claim 5 wherein
the set of one or more locations of the storage area is designated by a set of indicators, wherein
the set of indicators comprises an indicator for each respective location in the storage area, and
each indicator of the set of indicators indicates whether the respective location for the indicator is included in the set of one or more locations of the storage area.

12. The method of claim 5 further comprising:
performing a second operation on locations included in a second set of one or more locations of the storage area after the operation is performed on the locations in the set of one or more locations of the storage area, wherein
a second sieve comprises a second property representing the second operation and second information identifying the second set of one or more locations of the storage area.

13. The method of claim 12 wherein
the second set of one or more locations of the storage area is designated by the requester; and
the operation and the second operation are designated by the requester.

14. The method of claim 5 wherein
each operation identified in the sieve is performed on the locations included in the set of one or more locations of the storage area if the sieve is specified.

15. A system comprising:
a storage area; and
a computing node configured to perform an operation, wherein
the computing node is configured to access a sieve associated with the storage area, and
the sieve comprises a property representing the operation and information identifying a set of one or more storage locations of the storage area upon which the operation can be performed.

16. The system of claim 15 further comprising
a second computing node configured to manage data stored in the storage area, wherein the second computing node is configured to designate the property and the information.

## Patentansprüche

1. Verfahren, das aufweist:
in Antwort auf eine Anfrage, eine Operation auf einem Speicherbereich durchzuführen, das Zugreifen auf ein Siebelement, das mit dem Speicherbereich verknüpft ist, wobei
das Siebelement eine Eigenschaft aufweist, die die Operation und Informationen repräsentiert, die einen Satz aus einem oder mehreren Orten innerhalb des Speichergebietes identifizieren, auf denen die Operation durchgeführt werden kann, und
Durchführen der Operation nur auf Orten, die in dem Satz aus einem oder mehreren Orten des Speichergebietes enthalten sind, die im Siebelement identifiziert werden.

2. Verfahren nach Anspruch 1, bei dem
der Satz aus einem oder mehreren Orten des Speicherbereiches durch ein Anwendungsprogramm spezifiziert wird.

3. Verfahren nach Anspruch 1, bei dem die Operation die Replikation ist.

4. Verfahren nach Anspruch 1, das weiterhin aufweist:
Erhalten von Informationen von dem Siebelement, die einen Satz von Dateneinheiten identifizieren, wobei
eine Dateneinheit in dem Satz aus Dateneinheiten die Erlaubnis hat, die Operation auf den jeweiligen Daten in dem Satz aus einem oder mehreren Orten des Speicherbereiches durchzuführen.

5. Verfahren nach Anspruch 1, bei dem der Satz aus einem oder mehreren Orten des Speicherbereiches von einem Anforderer bestimmt wird.

6. Verfahren nach Anspruch 5, das weiterhin aufweist:
Erhalten einer Bestimmung der durchzuführenden Operation.

7. Verfahren nach Anspruch 5, bei dem der Anforderer die Daten im Speicherbereich verwaltet.

8. Verfahren nach Anspruch 5, bei dem der Anforderer eine Verwaltungsfunktion eines Satzes von Verwaltungsfunktionen für den Speicherbereich durchführt.

9. Verfahren nach Anspruch 5, bei dem der Anforderer einen jeweiligen physikalischen Ort im Speicherbereich identifiziert entsprechend jedem Ort in dem Satz aus einem oder mehreren Orten des Speicherbereiches.

10. Verfahren nach Anspruch 5, bei dem jeder Ort in dem Satz aus einem oder mehreren Orten des Speicherbereiches spezifiziert wird durch
einen Startort und
eine Anzahl von aneinandergrenzenden Orten beginnend mit dem Startort.

11. Verfahren nach Anspruch 5, bei dem
der Satz aus einem oder mehreren Orten des Speicherbereiches bestimmt wird durch einen Satz von Anzeigern, wobei
der Satz aus Anzeigern einen Anzeiger für jeden entsprechenden Ort in dem Speicherbereich aufweist, und
jeder Anzeiger des Satzes von Anzeigern anzeigt, ob der jeweilige Ort für den Anzeiger in dem Satz aus ein oder mehreren Orten des Speicherbereiches beinhaltet ist.

12. Verfahren nach Anspruch 5, das weiterhin aufweist:
Durchführen einer zweiten Operation auf Orten, die in einem zweiten Satz aus ein oder mehreren Orten des Speicherbereiches beinhaltet sind, nachdem die Operation auf den Orten in dem Satz aus einem oder mehreren Orten des Speicherbereiches durchgeführt wurde, wobei ein zweites Siebelement eine zweite Eigenschaft aufweist, die zweite Operation und zweite Information darstellt, die den zweiten Satz aus einem oder mehreren Orten des Speicherbereiches identifizieren.

13. Verfahren nach Anspruch 12, bei dem
der zweite Satz aus einem oder mehreren Orten des Speicherbereiches durch den Anforderer bestimmt wird und
die Operation und die zweite Operation von dem Anforderer bestimmt werden.

14. Verfahren nach Anspruch 5, bei dem jede in dem Siebelement identifizierte Operation auf den Orten durchgeführt wird, die in dem Satz aus einem oder mehreren Orten des Speicherbereiches beinhaltet sind, wenn das Siebelement spezifiziert wird.

15. System, das aufweist:
einen Speicherbereich und
einen Rechenknoten, der konfiguriert ist, um eine Operation durchzuführen, wobei
der Rechenknoten konfiguriert ist, um auf ein Siebelement zuzugreifen, das mit dem Speicherbereich verknüpft ist, und
das Siebelement eine Eigenschaft aufweist, die die Operation und Informationen darstellt, die einen Satz aus ein oder mehreren Speicherorten des Speichergebietes identifiziert, auf denen die Operation durchgeführt werden kann.

16. System nach Anspruch 15, das weiterhin aufweist
einen zweiten Rechenknoten, der konfiguriert ist, um Daten zu verwalten, die im Speicherbereich gespeichert sind
wobei der zweite Rechenknoten konfiguriert ist, um die Eigenschaft und die Information zu bestimmen.

## Revendications

1. Procédé comprenant les étapes suivantes :
en réponse à une demande d'exécuter une opération sur une zone de stockage,
accéder à un tamis associé à la zone de stockage, dans lequel
le tamis comprend une propriété représentant l'opération et des informations identifiant un ensemble d'un ou plusieurs emplacements dans la zone de stockage
après quoi l'opération peut être exécutée ; et
exécuter l'opération uniquement sur des emplacements qui sont inclus dans l'ensemble de un ou plusieurs emplacements de la zone de stockage identifiée dans le tamis.

2. Procédé selon la revendication 1, dans lequel
l'ensemble de un ou plusieurs emplacements de la zone de stockage est spécifié par un logiciel d'application.

3. Procédé selon la revendication 1, dans lequel
l'opération est une reproduction.

4. Procédé selon la revendication 1, comprenant en outre :
l'obtention d'informations identifiant un ensemble d'entités du tamis, dans lequel
une entité dans l'ensemble d'entités a la permission d'exécuter l'opération sur des données respectives dans l'ensemble d'un ou plusieurs emplacements de la zone de stockage.

5. Procédé selon la revendication 1, dans lequel
l'ensemble d'un ou plusieurs emplacements de la zone de stockage est désigné par un demandeur.

6. Procédé selon la revendication 5, comprenant en outre :
l'obtention d'une désignation de l'opération à exécuter.

7. Procédé selon la revendication 5, dans lequel
le demandeur gère les données dans la zone de stockage.

8. Procédé selon la revendication 5, dans lequel
le demandeur exécute une fonction de gestion d'un ensemble de fonctions de gestion pour la zone de stockage.

9. Procédé selon la revendication 5, dans lequel
le demandeur identifie un emplacement physique respectif dans la zone de stockage correspondant à chaque emplacement dans l'ensemble d'un ou plusieurs emplacements de la zone de stockage.

10. Procédé selon la revendication 5, dans lequel
chaque emplacement dans l'ensemble d'un ou plusieurs emplacements de la zone de stockage est spécifié par
un emplacement de départ et
un nombre d'emplacements contigus commençant au niveau de l'emplacement de départ.

11. Procédé selon la revendication 5, dans lequel
l'ensemble d'un ou plusieurs emplacements de la zone de stockage est désigné par un ensemble d'indicateurs, dans lequel
l'ensemble d'indicateurs comprend un indicateur pour chaque emplacement respectif dans la zone de stockage ; et
chaque indicateur de l'ensemble d'indicateurs indique si l'emplacement respectif pour l'indicateur est inclus dans l'ensemble d'un ou plusieurs emplacements de la zone de stockage.

12. Procédé selon la revendication 5, comprenant en outre :
l'exécution d'une seconde opération sur des emplacements inclus dans un second ensemble d'un ou plusieurs emplacements de la zone de stockage une fois que l'opération est exécutée sur les emplacements dans l'ensemble d'un ou plusieurs emplacements de la zone de stockage, dans lequel
un second tamis comprend une seconde propriété représentant la seconde opération et des secondes informations identifiant le second ensemble d'un ou plusieurs emplacements de la zone de stockage.

13. Procédé selon la revendication 12, dans lequel
le second ensemble d'un ou plusieurs emplacements de la zone de stockage est désigné par le demandeur ; et
l'opération et la seconde opération sont désignées par le demandeur.

14. Procédé selon la revendication 5, dans lequel
chaque opération identifiée dans le tamis est exécutée sur les emplacements inclus dans l'ensemble d'un ou plusieurs emplacements de la zone de stockage si le tamis est spécifié.

15. Système comprenant :
une zone de stockage ; et
un noeud informatique configuré de manière à exécuter une opération, dans lequel
le noeud informatique est configuré de manière à accéder à un tamis associé à la zone de stockage ; et
le tamis comprend une propriété représentant l'opération et des informations identifiant un ensemble d'un ou plusieurs emplacements de stockage de la zone de stockage sur lesquels l'opération peut être exécutée.

16. Système selon la revendication 15, comprenant en outre :
un second noeud informatique configuré de manière à gérer des données stockées dans la zone de stockage,
dans lequel le second noeud informatique est configuré pour désigner la propriété et les informations.
